# EUROPEAN PATENT SPECIFICATION

(11) **EP 0 741 648 B1**
(45) Date of publication and mention of the grant of the patent: **08.07.1998**
(21) Application number: 95906388.4
(22) Date of filing: 18.01.1995
(51) Int. Cl.: B60N 2/08

(54) **MOUNTING MECHANISM FOR A SEAT**
MECHANISMUS ZUM MONTIEREN EINES SITZES
MECANISME DE MONTAGE POUR UN SIEGE

(30) Priority: 18.01.1994 GB 9400858
(43) Date of publication of application: 13.11.1996
(73) Proprietor: Johnson Controls Automotive (UK) Ltd., Leigh-on-Sea Essex SS9 5JJ (GB)
(72) Inventor: FREEMAN, Colin, West Midlands B63 1DR (GB); HOLLOWAY, Ian, Pemberton, Stratford-on-Avon CV37 7JH (GB)
(74) Representative: Dodd, Graham Marshall
(86) International application number: GB9500091
(87) International publication number: WO9519272

(56) References cited:
- EP-A- 0 589 759
- GB-A- 2 033 738
- US-A- 4 648 657
- US-A- 4 671 571
- US-A- 4 881 774

## Description

This invention relates to a mounting mechanism for a seat, providing for sliding adjustment of the position of the seat relative to a support therefor, and latching of the seat in a selected one of a number of positions within its range of movement relative to the support. The invention has been devised in relation to such a mechanism intended for mounting the seat of a motor vehicle, e.g. a passenger car.

At least the driver's seat of a passenger car or virtually any other motor vehicle requires to be adjustable in the fore-and-aft direction to enable drivers of different stature satisfactorily to reach and operate the vehicle's controls. Such adjustment is usually provided by a mounting mechanism enabling the seat to be slidden forwardly and rearwardly. In some such vehicles, such adjustment of the seat also is required to facilitate access to the vehicle, e.g. to the rear seats of a passenger car which is not provided with an openable door or doors adjacent the rear seats, such adjustment of the seat being alternative or additional to folding or tilting of a part or all of the seat. With conventional slidably adjustable seat mounting mechanisms, incorporating latch means for retaining the seat in its required adjusted position, resumption of the required seat position after such sliding may require a considerable amount of "trial and error" on the part of the seat occupant before the correct position of the seat is established.

Accordingly there exists a requirement for the provision in a seat mounting mechanism of a facility enabling a required adjusted position of the seat within its range of sliding movement to be "remembered" whilst the seat is slid from such position, so that the seat can be returned to such position. It is broadly the object of the present invention to provide an improved mechanism for this purpose.

A seat mounting mechanism incorporating a "memory" device is disclosed in US-A-4648657 (Cox). The mechanism utilises a mask device which can be set in a fixed position in accordance with the required adjusted position of the seat, and which blocks access to all but two of a number of latch formations provided along a slide.

According to the present invention, we provide a mounting mechanism for a seat, comprising:
respective slide members adapted for connection to the seat and to a support for the seat, said slide members cooperating with one another to provide for sliding movement of the seat relative to said support;
a first latch member associated with one of said slide members and cooperable when in an engaged position with a selected one or ones of a plurality of latch formations spaced along the other slide member to prevent said sliding movement, and disengageable therefrom to permit said sliding movement;
a marker member movable along said other slide member;
a memory latch member associated with said marker member and operable between engaged and disengaged positions with said latch formations in which it respectively prevents and permits said movement of the marker member;
operating means operable on the first latch member and the memory latch member when the seat is required to be adjusted to a selected position, and means operable on only the first latch member when the seat is to be moved from its selected adjusted position and returned thereto;
and a hold-out latch member arranged to operate on said first latch member when it only has been operated and the seat has been moved from its selected position, to hold the first latch member against movement into its engaged position with said latch formations.

The invention will now be described by way of example with reference to the accompanying drawings, of which:
FIGURE 1 is a perspective view of an embodiment of seat adjustment mechanism in accordance with the present invention;
FIGURE 2 is a diagrammatic elevation of the mechanism in a first operative position;
FIGURE 3 is a view as Figure 2, but in an alternative operative condition, wherein the seat is latched in the adjusted position retained as shown in Figure 2;
FIGURE 4 is a view as Figures 2 and 3, but in an alternative operative position in the selected position of the seat can be adjusted.

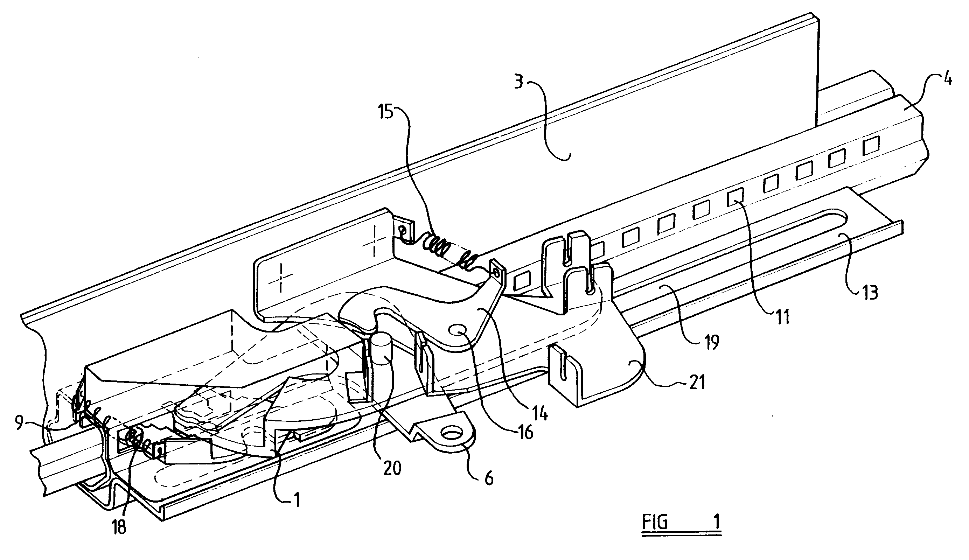

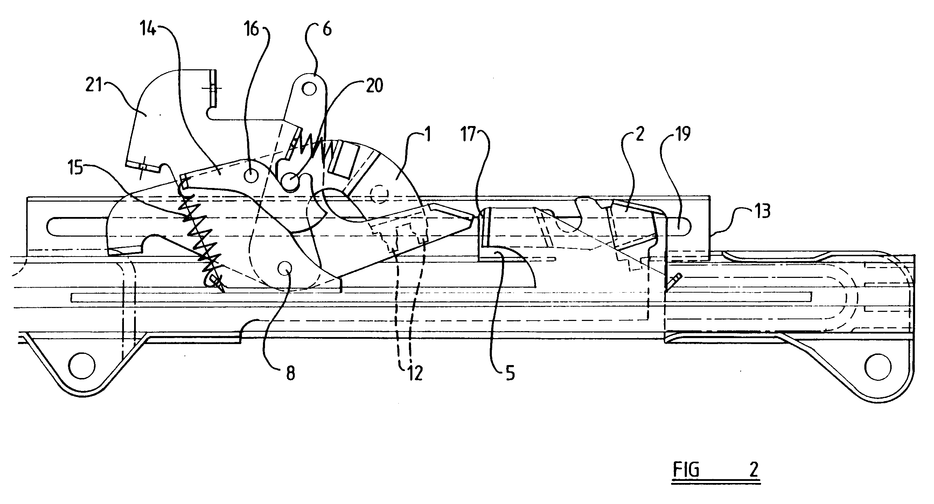

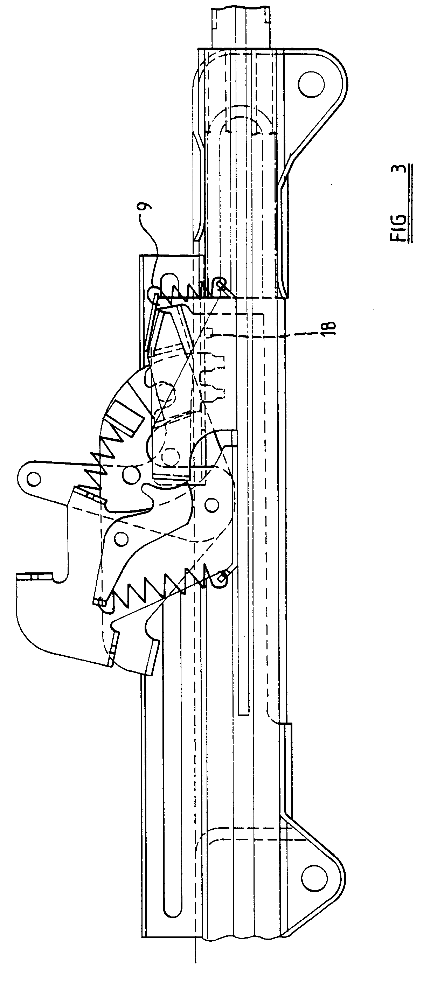

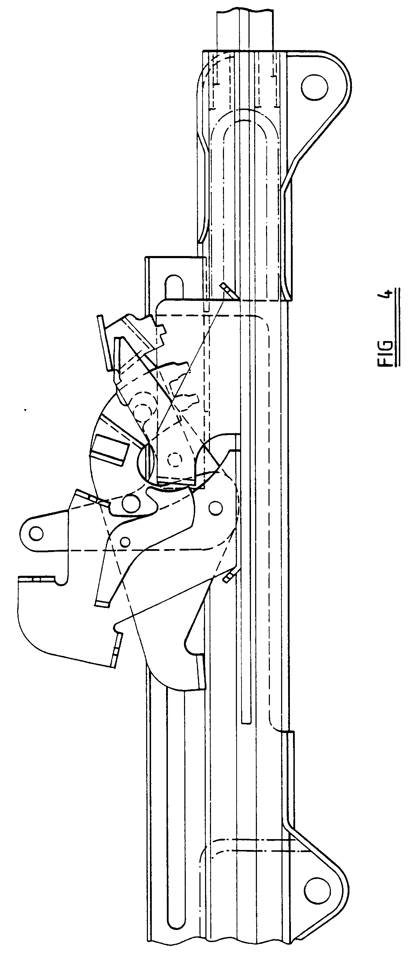

Referring firstly to Figure 1 of the drawings, this shows a seat mounting mechanism for a vehicle seat, the mechanism comprising a slide means constituted by a lower slide member 4 which in use would be attached to the vehicle structure, and an upper slide member 3 which in use would be attached to the seat. The two slide members are of cross-sectional shapes which interfere with one another to provide relative sliding movement therebetween in the direciton lengthwise thereof. The lower slide member 4 is provided with a plurality of latch formations in the form of windows 11, spaced along the slide member. A first, main, latch member 1, which is pivoted about a pivot 8 fixed to the upper slide member, has teeth 12 which are engageable with the windows 11 when the main latch member is in an engaged position, to latch the upper and lower slide members to one another in a selected position within their range of sliding movement. The main latch member is pivotable to a disengaged position in which the teeth 12 are clear of the windows 11, enabling the slide members to move lengthwise relative to one another.

A memory latch member 2 is pivotally mounted at a pivot 7 to a marker member in the form of a memory latch carrier 5. The memory latch member 2 has teeth 18 which are engageable when the memory latch member is in an engaged position, with the windows 11 in the lower slide member 4. When the memory latch member 2 is pivoted to a disengaged position and its teeth 18 do not co-operate with the windows 11, the memory latch carrier 5 is free to slide relative to the lower slide member 4 in a slot 19 in a guide plate 13 secured to the lower slide member. Memory latch member 2 is biased by a spring 9 to its engaged position.

A relay lever 6 is operable to disengage both the main latch member 1 and memory latch member 2 from their engaged positions, enabling the upper slide member 3 to move lengthwise relative to the lower slide member 4. The memory latch carrier 5 and the memory latch with it travel with the upper slide member 3, the path of movement of the memory latch carrier being controlled by its engagement in the slot 19 of the guide plate 13. Such adjustment is shown in Figure 4 of the drawings.

After such fore and aft adjustment of the seat to a chosen position, the relay lever is released, whereupon both latch members are spring biased into their engaged position in which they co-operate with the windows 11 in the lower slide member, as shown in Figure 3.

The main latch member 1 can be moved to its disengaged position independently of the memory latch member 2 as shown in Figure 2. When thus disengaged, the upper slide member 3 can be moved lengthwise relative to the lower slide member 4 whilst the memory latch carrier 5 retains its position relative to the lower slide member 4. Initial movement of the upper slide member 3 relative to the lower slide member 4 allows a hold-out latch member 14 to rotate about its pivot 16 on a main latch mounting bracket 21, such pivotal movement taking place under the influence of a spring 15. The hold-out latch 14 engages an abutment 20 provided on the main latch member 1, preventing the main latch member from returning to its engaged position until the condition described below is reached.

The upper slide member and the seat attached thereto are now free to slide forwardly while the memory latch carrier member remains in its existing position relative to the lower slide member 4, being held in such position by engagement of its teeth 18 with the appropriate windows 11.

When the seat is slid rearwardly again, the hold-out latch makes contact with a face 17 on the memory latch carrier 5. Further rearward movement of the seat rotates the hold-out latch about its pivot, thereby disengaging the hold-out latch from the main latch abutment 20. This allows the main latch to move rotationally, and its teeth 12 to engage the appropriate windows 11 in the lower slide member. Thus the seat is again latched in its starting position from which it was first moved forwardly.

It will thus be appreciated that the mechanism according to the present invention allows the establishment of an adjusted position for the seat, and thereafter unlatching of the seat from such adjusted position and free forwards and rearwards movement of the seat until it again is returned to the adjusted position, whereupon the seat is again latched in position.

It will be appreciated that a seat adjustment mechanism may be provided operating in accordance with the principles above described but incorporating different configurations and/or dispositions of the various components thereof, provided they fall within the scope of the invention as defined in the appended claims.

## Claims

1. A mounting mechanism for a seat, comprising:
respective slide members (3, 4) adapted for connection to the seat and to a support for the seat, said slide members cooperating with one another to provide for sliding movement of the seat relative to said support;
a first latch member (1) associated with one of said slide members (3) and cooperable when in an engaged position with a selected one or ones of a plurality of latch formations (11) spaced along the other slide member (4) to prevent said sliding movement, and disengageable therefrom to permit said sliding movement;
a marker member (5) movable along said other slide member (4);
a memory latch member (2) associated with said marker member (5) and operable between engaged and disengaged positions with said latch formations (11) in which it respectively prevents and permits said movement of the marker member;
operating means (6) operable on the first latch member (1) and the memory latch member (2) when the seat is required to be adjusted to a selected position, and means operable on only the first latch member when the seat is to be moved from its selected adjusted position and returned thereto;
and a hold-out latch member (14) arranged to operate on said first latch member-when it (1) only has been operated and the seat has been moved from its selected position, to hold the first latch member against movement into its engaged position with said latch formations.

2. A mounting mechanism according to Claim 1 wherein, when the seat has been returned to its selected adjusted position, the hold-out latch member (11) engages an abutment face (17) on the marker member to cause movement of the hold-out latch member and release of the first latch member (1) to re-engage with said latch formations (11).

## Patentansprüche

1. Mechanismus zum Montieren eines Sitzes, mit:
Gleitbahnteilen (3, 4), die zur Verbindung mit dem Sitz und mit einer Abstützung für den Sitz bestimmt sind, wobei die Gleitbahnteile miteinander zusammenwirken, um eine Verschiebebewegung des Sitzes relativ zu der Abstützung zu ermöglichen;
einem ersten Verriegelungselement (1), das einem der Gleitbahnteile (3) zugeordnet ist und damit Zusammenwirken kann, wenn es sich in einer Eingriffsposition mit einer oder mehreren ausgewählten aus einer Vielzahl von Verriegelungsausformungen (11) befindet, die entlang des anderen Gleitbahnteils (4) beabstandet sind, um die Verschiebebewegung zu verhindern, und daraus außer Eingriff gebracht werden kann, um die Verschiebebewegung zuzulassen;
einem Markierungselement (5), das entlang des anderen Gleitbahnteils (4) bewegbar ist;
einem Gedächtnis-Verriegelungselement (2), das dem Markierungselement (5) zugeordnet ist und zwischen in und außer Eingriff mit den Verriegelungsausformungen (11) stehenden Stellungen betätigbar ist, in denen es die Bewegung des Markierungselements verhindert bzw. zuläßt;
einer Betätigungseinrichtung (6), die auf das erste Verriegelungselement (1) und das Gedächtnis-Verriegelungselement (2) wirkt, wenn der Sitz in eine ausgewählte Position einzustellen ist, und einem Mittel, das nur auf das erste Verriegelungselement wirkt, wenn der Sitz aus seiner ausgewählten eingestellten Position wegzubewegen und in diese zurückzubringen ist;
und einem Aufhalte-Verriegelungselement (14), das so angeordnet ist, daß es auf das erste Verriegelungselement (1) wirkt, wenn es allein betätigt worden ist und der Sitz aus seiner ausgewählten Position wegbewegt worden ist, um das erste Verriegelungselement gegen eine Bewegung in seine mit den Verriegelungsausformungen in Eingriff stehende Position zu halten.

2. Mechanismus zum Montieren eines Sitzes nach Anspruch 1, dadurch gekennzeichnet, daß wenn der Sitz in seine ausgewählte eingestellte Position zurückgesetzt worden ist, das AufhalteVerriegelungselement (11) mit einer Anschlagfläche (17) auf dem Markierungselement zusammenwirkt, um eine Bewegung des Aufhalte-Verriegelungselements und ein Lösen des ersten Verriegelungselements (1) zum erneuten Eingriff in die Verriegelungsausformungen (11) zu bewirken.

## Revendications

1. Mécanisme de montage pour un siège, comprenant :
- des éléments de glissière respectifs (3, 4) pouvant être couplés au siège et à un support du siège, lesdits éléments de glissière coopérant entre eux pour assurer un mouvement de coulissement du siège par rapport audit support,
- un premier élément de verrouillage (1) associé à l'un (3) desdits éléments de glissière et pouvant coopérer, dans une position de mise en prise, avec une ou plusieurs structures de verrouillage (11) choisies parmi une pluralité de structures de verrouillage espacées le long de l'autre élément de glissière (4) afin d'empêcher ledit mouvement de coulissement, et pouvant s'en dégager pour permettre ledit mouvement de coulissement,
- un élément de repérage (5) mobile le long dudit autre élément de glissière (4),
- un élément de verrouillage (2) à mémoire, associé audit élément de repérage (5) et pouvant être actionné entre des positions d'engagement et de séparation avec lesdites structures de verrouillage (11) dans lesquelles il empêche et permet ledit déplacement de l'élément de repérage,
- un moyen d'actionnement (6) agissant sur le premier élément de verrouillage (1) et sur l'élément de verrouillage (2) à mémoire quand le siège doit être réglé en une position choisie, et un moyen n'agissant que sur le premier élément de verrouillage quand le siège doit être déplacé de sa position de réglage choisie et ramené à cette dernière, et
- un élément (14) anti-verrouillage, conçu pour agir sur ledit premier élément de verrouillage (1) quand il est le seul à avoir été actionné et que le siège a été déplacé de sa position choisie, afin d'empêcher le premier élément de verrouillage de se déplacer dans sa position d'engagement avec lesdites structures de verrouillage.

2. Mécanisme de montage selon la revendication 1, dans lequel, lorsque le siège a été ramené à sa position de réglage choisie, l'élément anti-verrouillage (14) porte contre une face de butée (17) de l'élément de repérage pour provoquer le déplacement de l'élément anti-verrouillage (14) et permettre au premier élément de verrouillage (1) de se remettre en prise avec les structures de verrouillage (11).
